# EUROPEAN PATENT APPLICATION

(11) **EP 1 619 615 A1**
(43) Date of publication of application: **25.01.2006**
(21) Application number: 05076654.2
(22) Date of filing: 19.07.2005
(51) Int. Cl.: G06Q 10/00

(54) **A computer implemented method for providing a user interface for running a plurality of business instances**

(30) Priority: 19.07.2004 EP 04017027
(71) Applicant: SAP AG, 69190 Walldorf (DE)
(72) Inventor: Hatscher, Michael, 20099 Hamburg (DE); Nieves, Sandra, 76137 Karlsruhe (DE); Beringer, Joerg, 60431 Frankfurt (DE)
(74) Representative: Winckels, Johannes Hubertus F.

(57) **Abstract**

A computer implemented method for providing a user interface for running a plurality of business entities. In said entities data related to a process instance and data related to an object instance are managed in a uniform way. According to the invention the method comprises providing a generalized meta model to unify process data and object data where there is a direct relationship between process and object instance; providing an interface generator for directly generating a user interface from the generalized meta model, that allows the user to manipulate data either directly by manipulating the object data or indirectly by performing a process step; and providing said user interface by said interface generator, said user interface providing a hybrid view of a process view representing phase data of an instantiated process instance and an object view representing object data of an instantiated object instance, in said generalized information architecture to which said user interface provides said interface.

## Description

### CROSS-REFERENCE TO RELATED APPLICATIONS

This application claims the benefit of priority from 04017027.6, the entire content of which is incorporated herein by reference.

The invention relates to a computer implemented method for providing a user interface for running a plurality of business instances, wherein data related to a process instance and data related to an object instance are managed.

In prior art user interfaces for running a plurality of business instances, there are scenarios with semantically connected business entities (like, for example, collaboration tools that enabled a group of people to jointly work on a given business object). Usually, those business entities are disconnected in the system and displayed in separated user interfaces. It is the user's task to mentally establish a connection between the different business entities, e.g. an instantiated process and object data related to a particular phase of the process instance that form the user's business context.

It is desirable to provide a well structured user interface providing coherent screens that reflect the work practice of the user in order to provide good user experience. It is also desirable to reduce mental overhead of the user.

Accordingly, the invention provides a method according to the features of claim 1. In particular, a consistent interface is provided that is directly reflecting the business context a user is interested in, by providing a generalized meta model to unify process data and object data where there is a direct relationship between process and object instance; providing an interface generator for directly generating a user interface from the generalized meta model, that allows the user to manipulate data either directly by manipulating the object data or indirectly by performing a process step; and providing said user interface by said interface generator, said user interface providing a hybrid view of a process view representing phase data of an instantiated process instance and an object view representing object data of an instantiated object instance, in said generalized information architecture to which said user interface provides said interface.

The innovation relieves the user of the burden of mentally establishing the connection between semantically connected, but system-wise disconnected business entities. This reduces the user's navigation effort and increases efficiency: the user has a view on everything that contributes to her/his task and the business context at hand. Furthermore it reduces mental overhead, freeing up the user's mental capacities.

As an example, the process instance is a promotion process of an employee. The object instance might represent an employee status. Then the meta model unifies promotion process data and employee data which are semantically connected, but also unified in the metal model according to the invention. The employee data, e.g. an increase in the salary, might be changed either directly by manipulating the employee data in the object instance, or indirectly by manipulating the promotion process data.

In this way, specific aspects of different business entities can be presented within a single context. This interface is also referred to as a hybrid contextual floorplan for object instances.

Preferably, the interface generator might be arranged to provide a toggling option in the user interface for toggling between said process view and said object view in the hybrid view of the interface. Advantageously, the user's view can be toggled on the newly-connected business entities to focus the user's attention and to provide additional functionality and information, for example by providing entity-specific functionality and information in one dedicated screen area of the interface. It is also possible to merge simultaneous views in the interface related to the multiple set of instantiated business entities and display them e.g. side by side.

It allows users, for example, but not limited to, to track a business entity's progress and work on the static data of this business entity at the same time. Likewise, for example, teamrooms or workflows previously disconnected from the business objects they refer to can now be displayed together with the business object as intertwined virtual units.

Further, the identification of the instantiated object and the instantiated process is pre-modeled, so that the system is caused to automatically create the multiple instances. Alternatively, the identification of the instantiated object the instantiated process is performed upon instantiating an object and instantiating a process, thereby realizing a 1:1 relationship between primary object and process, or primary object and activity that is created by instantiating the process or activity.

The invention will be further elucidated by referring to the various drawings. In particular:
Figure 1 shows a basic user interface layout for the interface according to the invention showing a hybrid contextual floor plan;
Figure 2 shows a specific hybrid contextual floor plan having a process instance and an object instance relating to a particular phase of the process instance, wherein the object instance is toggled; and
Figure 3 shows the specific hybrid contextual floor plan of Fig. 2 wherein the process instance is toggled.

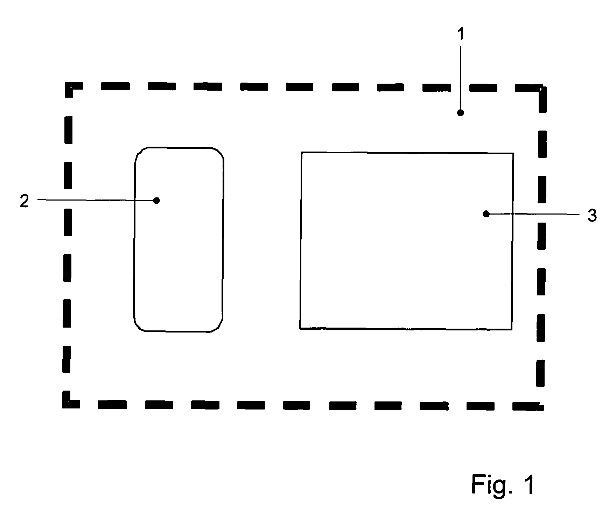

Referring to Figure 1, for simplifying the task of layouting a number of complex business entities into coherent focus areas, the invention provides a hybrid context-based application design concept by offering pre-defined contextual floor plans for the most common types of work context. A Hybrid Contextual Floor plan 1 consists of a left hand Contextual Panel 2 that provides consistent navigation and access to contextual actions and views, and a right hand container or content area 3 for launching such views and actions in-place.

The floor plan 1 illustrated in Figure 1 provides a consistent interaction paradigm for many fundamental context types that one typically finds in a business application. In particular, the right hand container 3, is arranged to provide a user interface to a number of context archetypes which reflect the most common work contexts. Some of them are activity oriented and others are work instance oriented. In particular, these archetypes can be categorized as follows:
- Activity-centric contexts. This context is driven by a role, topic, task, or event that triggered this activity. Depending on the specific type certain actions and resources are meaningful to this context and can be preconfigured as a context template. Activity-centric contexts usually have typical views like work lists, work status dashboards, resources, participants, and so on.
- Object-centric contexts. This context is determined by an object instance and includes related object operations as well as views on all facets on the object. Different job roles may be interested in different facets of the same object type.
- Process-centric contexts. This context is a workflow instance. Most actions are executed as predefined process steps. Because of the nature of workflow, selected steps may be owned by different users.

In short, in work instance oriented contexts, a number of views or perspectives is presented showing various aspects of a particular business situation, in particular, a particular object instance related to said situation or a particular process instance related to the situation.

Important characteristics of a view are the following:
- Views are not transactional. They do not need any close, cancel, or done buttons. However, they may include functions within their UI that launch transactional actions.
- Views always stay within the same context. The user experience is not navigation but rather changing the perspective.

In this way, within a single context, a user can switch to different views for different purposes of assessing the context.

In contrast, in activity oriented work contexts, a user role is central of a specific user who has to perform certain activities in a certain work context. In addition, certain activities, while not directly related to a specific role in the organization, can be centralized around a specific business situation that arises, such as exception handling or other incidental tasks that may have to be performed in a business. Rather than being assigned to certain job roles of users in a business and the bundle of tasks related to said job roles, these contexts can models an ad-hoc activity space that is focused on a specific business problem or a specific task.

In browsing such a context, the Context Panel 2 lists actions that are relevant for the current work context. In contrast to views, actions are transactional and may even point to another related work context. Whenever possible, actions should be launched in-place in the right hand container.

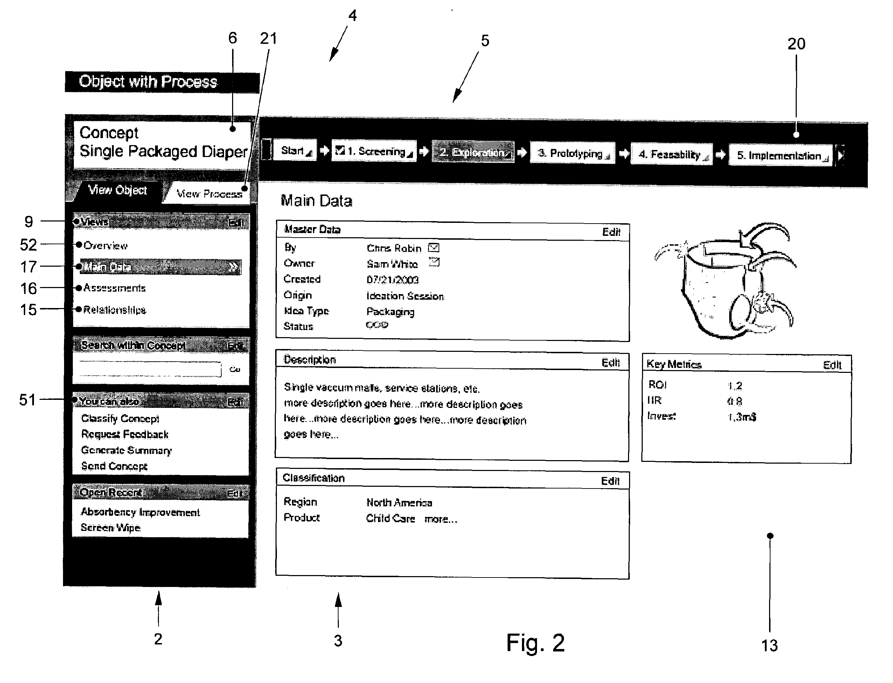

Referring to Fig. 2 a specific hybrid contextual floor plan is represented. The Context Panel 2 comprises a Phase Indicator 20 across the top of the content area to indicate that only one business entity is identified, viz a business object instance, such as an employee. Thus, the interface is an Object Instance View 4, also called the object-centered mode. In the object-centered mode 4, the user may choose between different views (perspectives) on a concrete instance of a business object consisting of a "fact sheet"- like overview 5 and detailed views of different facets of the object. All functionality to manipulate and act on the object are provided.

According to the contextual views user interface layout of the invention, the Object Action Pattern's layout features a Contextual Panel 2 (CP) with an area for the instance identifier 6, as well as a content area 3 which displays the object's facets, or actions as chosen from the Contextual Panel or from within a preceding action screen.

In particular, in Figure 2 a Fact Sheet View of an Object Action Pattern is shown. In the Object Instance View different perspectives on the object can be presented:
- a Class Name view displays the master data of this object type. If required those data may be grouped into several tabs as indicated by the figure.
- a Summary view displays a snapshot of this object with the most essential data. This is like a fact sheet or the overview page. It should inform the user about the basic facts and state of the object.
- a Status view provides status indicators as well analytics about this object.
- a Facet views provide specific perspectives on the object that represent a kind of sub-activity in itself. When user switch to a facet they also focus on managing a specific sub-aspect of the object.

Which of these views are appropriate to include into the object instance view depends on the characteristics of the particular object type. In addition to the here above discussed fact sheet view, a Main Data view provides access to the main data of an object. If the amount of data does not fit on one screen, those data can be grouped by topic or any other intuitive category and displayed on tabs. While the Fact Sheet is for quick inspection and not for editing, this view is a read and write view to maintain the main data of the object instance ― typically the master data.

Furthermore, Object-specific perspective views can be presented as "Facet views". For complex objects, such additional views may be implemented, each representing a facet of the object. For example, foreign key relationships to other objects are candidates to let users manage such related data within a separate view. For example, all orders related to a supplier, or all attachments related to a product concept would be candidates for facets.

Such additional views are justified if the views represent a primary facet of the object with related actions. In other words, the facet becomes a sub-activity area for one particular aspect of the object. A facet of an object-centric view could be other documents related to the primary object. These other documents are shown in the content area, when clicking on the corresponding view.

In addition, occasional tasks should be implemented as "You Can" actions.

Still referring to Fig. 2, two business entities have been identified, viz. a business object instance, e.g. relating to an employee, and a process instance, e.g. a promotion process of an employee. The Phase Indicator 20 indicates this information as a generalized meta model in order to quickly communicate that there is an process associated with the object.

Further, the Context Panel 2 comprises a Mode Switch 21, also called Toggle Switch, allowing toggling between the two different business entity modes. The default view is the object view mode. It's features are the same as the ones of the basic user interface layout, except for the Mode Switch 21. In process view mode the regular Guided Procedure runtime pattern is displayed - again except for the Mode Switch 21 to toggle back to object view mode. In Fig. 2 the Phase Indicator 20 is across the top and the View Area 9 as well as "You can also" Area 51 in the Contextual Panel 2 are shown.

The Contextual Panel 2 of the combination of object and process contains one additional element right below the ID component 24 - the Mode Switch 21. The Mode Switch 21 enable toggling between the object and the process view modes. Other than that, the Contextual Panel 2 contains the same elements as in the object or process only situations.

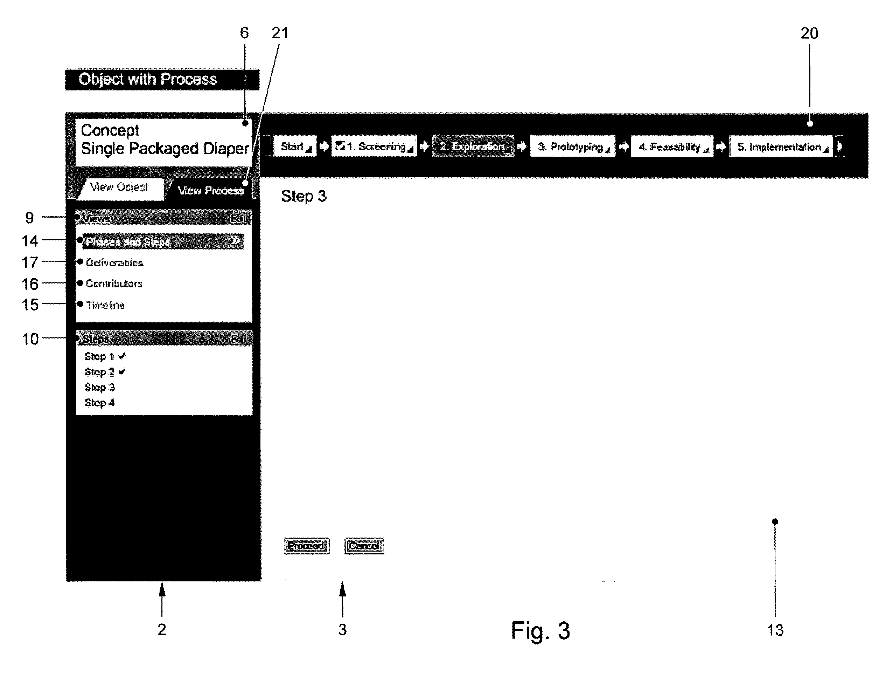

In order to toggle between process and object view on the same business object, the Mode Switch 21 can be used. Fig. 3 shows the process views, while Fig. 2 shows the object views. The process view does not show the "You can also" Area 51 in the Contextual Panel 2, but instead offers a "Steps" Area 10. Upon toggling modes between process and object view, the Contextual Panel's content changes.

Using either the drop-down menu entries from the Phase Indicator 20 or the Step Tree 10, the user can activate certain actions coupled to the steps in the Guided Procedure. These actions are then displayed in the Content Area 13. Only available actions are displayed and active; non-available actions and phases are grayed out.

In particular, in the process view, the contextual panel 2 contains an Instance Identifier 6, a Views Area 9, and a Guided Procedure Step Tree 10. The content area 3 features top to bottom the following elements: the Phase Indicator 20 as well as the area 13 containing the action, which takes up most of the screen real estate.

In this Guided Procedures view different perspectives are presented on the process or its objects:
- The "Phases and Steps" process view 14 shows each step for the current phase; when selected, the corresponding action is shown in the content area. This view supports the user in working through the steps of the process.
- a Timeline view 15 shows the procedure along a timeline, making due dates and time frames more prominent. This view is particularly beneficial when milestones and deadlines are the focus.
- The Contributors 16 view shows all contributors involved in the procedure, which parts of the process they are involved in, and what their contributions are. Collaboration features in this view allow users to get in touch quickly with other contributors, push information to them, or replace them with someone else if need be.
- The Deliverables 17 view lists all output of each step that has been completed so far. This view is particularly beneficial for processes that orient themselves around deliverables tracking rather than a timeline or sequence of steps to complete.

Additionally, the Overview (shown in the object view 52, but not shown in the process view) may show all phases with all their steps, the current status, and the owner of the step on one page. The overview gives at-a-glance information about the status of the procedure and its objects.

The hybrid contextual floor plan according to the invention allows the user to manipulate data either directly by manipulating the object data, viz. the employee's data, or indirectly by performing a process step, viz. performing a salary increase.

Besides the standard overview of "Phase and Steps" 14 that is guiding the user though the process, additional standard views can be provided for tracking the progress, for collaborating among all contributors, and for managing the proves by deliverables.

For example, the "Deliverables" view 17 provides functions to track and manage deliverables that are associated with a process instance. The view lists the status, and the responsible user. The view also supports related tasks like task assignment and document check in and versioning control.

In addition, the "Contributors" view 16 opens a list of all the people participating in a given process instance. It offers related ad-hoc collaboration tools to coordinate and communicate with all participants. A process owner can assign tasks to selected users as well as add and remove contributors and assess a single person's contribution to the overall process.

It allows users, for example, but not limited to, to track a business entity's progress and work on the static data of this business entity at the same time. Likewise, for example, teamrooms or workflows previously disconnected from the business objects they refer to can now be displayed together with the business object as intertwined virtual units.

## Claims

1. A computer implemented method for providing a user interface for running a plurality of business entities, wherein data related to a process instance and data related to an object instance are managed in a uniform way, the method comprising:
- providing a generalized meta model to unify process data and object data where there is a direct relationship between process and object instance;
- providing an interface generator for directly generating a user interface from the generalized meta model, that allows the user to manipulate data either directly by manipulating the object data or indirectly by performing a process step; and
- providing said user interface by said interface generator, said user interface providing a hybrid view of a process view representing phase data of an instantiated process instance and an object view representing object data of an instantiated object instance, in said generalized information architecture to which said user interface provides said interface.

2. A computer implemented method according to claim 1, wherein the interface generator further is arranged to provide a toggling option in the user interface for toggling between said process view and said object view in the hybrid view of the interface.

3. A computer implemented method according to claim 1, wherein the interface generator further is arranged to provide said process view and said object view simultaneously in the hybrid view of the interface.

4. A computer implemented method according to claim 2 or 3, wherein the hybrid view in the interface provides functionality and information related to the instantiated process instance or the particular phase of the instantiated process in one dedicated screen area of the interface.

5. A computer implemented method according to any of the previous claims, wherein the identification of the instantiated object and the instantiated process is pre-modeled.

6. A computer implemented method according to any of claims 1-4, wherein the identification of the instantiated object and the instantiated process is performed upon instantiating an object and instantiating a process.
